# EUROPEAN PATENT APPLICATION

(11) **EP 3 361 219 A1**
(43) Date of publication of application: **15.08.2018**
(21) Application number: 16853291.9
(22) Date of filing: 17.05.2016
(51) Int. Cl.: G01C 21/34, G08G 1/09, G09B 29/00, G09B 29/10

(54) **DRIVING COMFORT CALCULATION DEVICE, DRIVING COMFORT CALCULATION METHOD, AND DRIVING COMFORT CALCULATION SYSTEM**

(30) Priority: 06.10.2015 JP 2015198414
(71) Applicant: Clarion Co., Ltd., Saitama-shi, Saitama 330-0081 (JP)
(72) Inventor: DUAN Qingzhu, Tokyo 100-8280 (JP); SEKIGUCHI Takaaki, Tokyo 100-8280 (JP); NAGAI Yasushi, Saitama-shi Saitama 330-0081 (JP)
(74) Representative: Strehl Schübel-Hopf & Partner
(86) International application number: PCT/JP2016/064624
(87) International publication number: WO 2017/061135

(57) **Abstract**

A driver can be presented with a route option giving high driving comfort. A receiver receives a plurality of route options from a terminal device mounted on a vehicle. A driving plan generation module sets, for each of the plurality of received route options, a traveling time of a section in which automatic driving of the vehicle is to be used and a traveling time of a section in which the vehicle is to be manually driven. A comfort calculation module calculates driving comfort of a driver for each of the plurality of route options based on the traveling time of the section in which automatic driving of the vehicle is to be used and the traveling time of the section in which the vehicle is to be manually driven.

## Description

### Technical Field

The present invention relates to a driving comfort calculation device, a driving comfort calculation method, and a driving comfort calculation system. The present invention claims priority to Japanese Patent Application No. 2015-198414 filed on October 6, 2015, the contents of which are incorporated herein by reference in its entirety for the designated states where incorporation by reference of literature is allowed.

### Background Art

There is known Patent Literature 1 given below as the background art of this technical field. In Patent Literature 1, there is described an "automatic driving support device, which is used for an automatic driving vehicle capable of driving automatically, the automatic driving support device including a schedule presentation module configured to present to a driver at least one of an automatic driving scheduled section and an automatic driving scheduled time before the automatic driving vehicle reaches the automatic driving scheduled section."

### Citation List

### Patent Literature

[PTL 1] Japanese Patent Laid-open Publication No. 2015-17944

### Summary of Invention

### Technical Problem

When a road allowing automatic driving or a road dedicated for automatic driving is provided, for example, a navigation device mounted on an automatic driving vehicle may retrieve route options including an automatic driving section. A driver may wish to select a route option giving high driving comfort from among the route options including an automatic driving section retrieved by the navigation device. However, it is difficult for the driver to determine which route option is comfortable.

In Patent Literature 1, only presentation of at least one of the automatic driving scheduled section or the automatic driving scheduled time to the driver is described.

In view of the above, the present invention has an object to provide a technology capable of presenting a driver with a route option giving high driving comfort for the driver.

### Solution to Problem

The present application includes a plurality of measures for solving at least a part of the above-mentioned problem, examples of which are enumerated as follows. In order to solve the above-mentioned problem, according to one embodiment of the present invention, there is provided a driving comfort calculation device including: a receiver configured to receive a plurality of route options from a terminal device mounted on a vehicle; a driving plan generation module configured to set, for each of the plurality of received route options, a traveling time of a section in which automatic driving of the vehicle is to be used and a traveling time of a section in which the vehicle is to be manually driven; and a comfort calculation module configured to calculate driving comfort of the driver for each of the plurality of received route options based on the traveling time of the section in which automatic driving of the vehicle is to be used and the traveling time of the section in which the vehicle is to be manually driven.

### Advantageous Effects of Invention

According to the present invention, it is possible to present a driver with a route option giving high driving comfort for the driver. Problems, configurations, and effects other than those described above become apparent from the following description of an embodiment of the present invention.

### Brief Description of Drawings

FIG. 1 is a diagram for illustrating a driving comfort calculation system according to one embodiment of the present invention.
FIG. 2 is a diagram for illustrating an example of a sequence diagram for illustrating an overall operation of the driving comfort calculation system.
FIG. 3 is a diagram for illustrating an example of functional blocks of an in-vehicle device 1.
FIG. 4 is a table for showing an example of a data structure of a route option storage 18.
FIG. 5 is a diagram for illustrating an example of functional blocks of a driving comfort calculation device 2.
FIG. 6 is a table for showing an example of a data structure of a driver information storage 25.
FIG. 7 is a table for showing an example of a data structure of a driving plan storage 27.
FIG. 8 is a table for showing an example of a data structure of a comfort rule storage 28.
FIG. 9 is a first diagram for illustrating an example of a screen displayed on a display device of the in-vehicle device 1.
FIG. 10 is a second diagram for illustrating an example of the screen displayed on the display device of the in-vehicle device 1.
FIG. 11 is a third diagram for illustrating an example of the screen displayed on the display device of the in-vehicle device 1.
FIG. 12 is a fourth diagram for illustrating an example of the screen displayed on the display device of the in-vehicle device 1.
FIG. 13 is a flow chart for illustrating an example of an operation of generating a driving plan by the driving comfort calculation device 2.
FIG. 14 is a flow chart for illustrating an example of an operation of generating a driving plan for an automatic driving section by the driving comfort calculation device 2.
FIG. 15 is a flow chart for illustrating an example of an operation of calculating comfort by the driving comfort calculation device 2.
FIG. 16 is a diagram for illustrating an example of a hardware configuration of the driving comfort calculation device 2.

### Description of Embodiments

In the following, a description is given of an embodiment of the present invention with reference to the drawings.

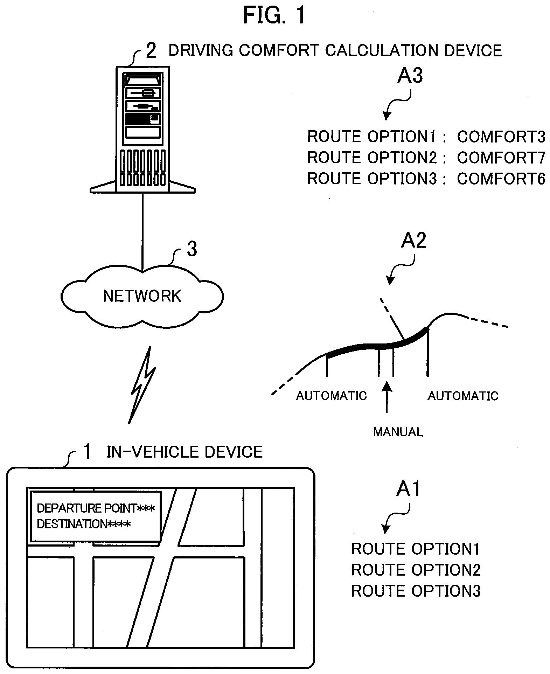

FIG. 1 is a diagram for illustrating a driving comfort calculation system according to one embodiment of the present invention. In FIG. 1, there is illustrated a driving comfort calculation system including an in-vehicle device 1, a driving comfort calculation device 2, and a network 3. Further, in FIG. 1, information used to describe an overall operation of the driving comfort calculation system (arrows A1 to A3) is illustrated.

The in-vehicle device 1 is, for example, a terminal device to be mounted on a vehicle, such as a navigation device, a smartphone, or a personal computer. The driving comfort calculation device 2 is an information processing device such as a server or a personal computer. The network 3 includes a wireless communication network of, for example, cellular phones and a network, for example, the Internet. The in-vehicle device 1 and the driving comfort calculation device 2 can communicate to/from each other via the network 3.

Now, a description is given of an overall operation of the driving comfort calculation system of FIG. 1.

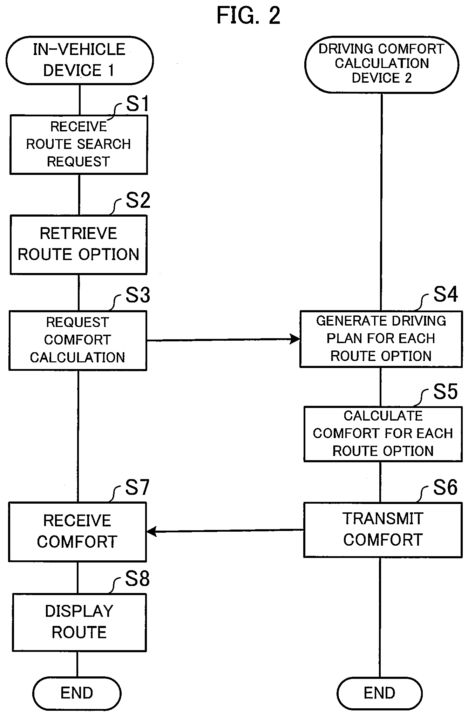

FIG. 2 is a diagram for illustrating an example of a sequence diagram for illustrating an overall operation of the driving comfort calculation system. First, the in-vehicle device 1 receives a route search request from a driver (Step S1).

Next, the in-vehicle device 1 retrieves a plurality of route options in response to the reception of the route search request of Step S1 (Step S2). For example, the in-vehicle device 1 retrieves a plurality of route options in ascending order of time taken to reach a destination from a departure point. The in-vehicle device 1 uses a commonly used technology to retrieve a plurality of route options. In this description, the in-vehicle device 1 is assumed to have retrieved route options 1 to 3 as indicated by the arrow A1 of FIG. 1.

A part of or the entire route section of a route option retrieved by the in-vehicle device 1 includes an automatic driving section of the vehicle . A vehicle with an automatic driving function is allowed to drive automatically in the automatic driving section. The vehicle described below is assumed to have an automatic driving function.

Next, when the in-vehicle device 1 retrieves the route options 1 to 3 in Step S2, the in-vehicle device 1 gives a comfort calculation request to the driving comfort calculation device 2 (Step S3). When the in-vehicle device 1 gives a comfort calculation request to the driving comfort calculation device 2, the in-vehicle device 1 also transmits the route options 1 to 3 retrieved in Step S2 to the driving comfort calculation device 2.

Next, when receiving the comfort calculation request and the route options 1 to 3 from the in-vehicle device 1, the driving comfort calculation device 2 generates a driving plan for each of the received route options 1 to 3 (Step S4).

The driving plan refers to planning, for each of the route options, a traveling time of a section in which automatic driving of the vehicle is to be used and a traveling time of a section in which the vehicle is to be manually driven. For example, the arrow A2 of FIG. 1 indicates a part of the route option 1. The thick part of the route indicated by the arrow A2 indicates an automatic driving section, whereas the thin part of the route indicates a manual driving section. For example, the driving comfort calculation device 2 does not plan the traveling time of automatic driving of the vehicle in the entire section (entire section of thick part) of the automatic driving section included in the route option 1, but sets the traveling time of manual driving such that the driver manually drives the vehicle also in the automatic driving section. The driving comfort calculation device 2 generates a driving plan similarly for the route options 2 and 3. The driving plan is described in detail later.

Next, when the driving comfort calculation device 2 has generated the driving plans in Step S4, the driving comfort calculation device 2 calculates driving comfort of the driver for each of the route options 1 to 3 based on the generated driving plans (Step S5). For example, as indicated by the arrow A3 of FIG. 1, the driving comfort calculation device 2 calculates comfort for each of the route options 1 to 3. The example of the arrow A3 indicates that, as the value of comfort becomes larger, driving comfort of the driver for the route options 1 to 3 becomes higher (it is indicated that comfort of driver becomes higher) . For example, it is indicated that when the driver adopts the route option 2 for traveling, the driver can drive the vehicle most comfortably.

A driving plan with a longer traveling time of automatic driving results in higher comfort of the driver. Further, a driving plan with a smaller number of switches between automatic driving and manual driving results in a smaller number of switching operations for the driver, namely, higher comfort of the driver. Further, a driving plan that causes an operation of switching between automatic driving and manual driving near an intersection requires the driver to pay more attention to the switching operation, resulting in low comfort of the driver. The calculation of comfort is described below in detail.

Next, the driving comfort calculation device 2 transmits the comfort calculated in Step S5 to the in-vehicle device 1 (Step S6) .

Next, the in-vehicle device 1 receives the comfort transmitted from the driving comfort calculation device 2 (Step S7) .

Next, the in-vehicle device 1 displays, for example, the route option 2 with the highest comfort on the display device (Step S8).

In this manner, the driving comfort calculation device 2 calculates driving comfort for each of the route options 1 to 3 retrieved by the in-vehicle device 1, and thus the in-vehicle device 1 can present a route option with high driving comfort of the driver.

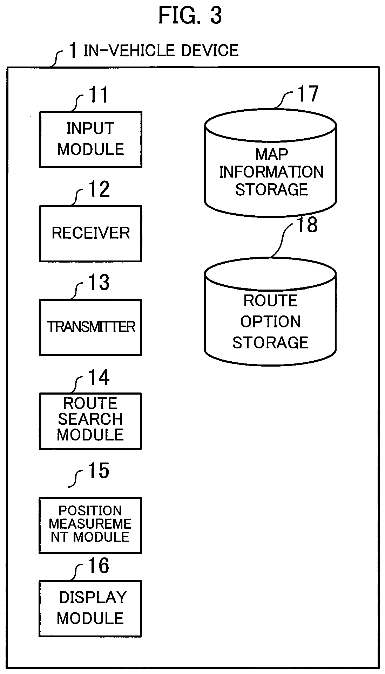

FIG. 3 is a diagram for illustrating an example of functional blocks of the in-vehicle device 1. As illustrated in FIG. 3, the in-vehicle device 1 includes an input module 11, a receiver 12, a transmitter 13, a route search module 14, a position measurement module 15, a display module 16, a map information storage 17, and a route option storage 18.

The input module 11 inputs information that corresponds to an operation by the driver via, for example, a touch panel or a key input device.

The receiver 12 receives information (data) transmitted from the driving comfort calculation device 2.

The transmitter 13 transmits predetermined information to the driving comfort calculation device 2.

The route search module 14 refers to the map information storage 17 based on the departure point and destination input by the driver, and retrieves a plurality of route options from the departure point to the destination.

The position measurement module 15 uses at least one of a global positioning system (GPS), a geomagnetic sensor configured to detect magnetism, or a gyro sensor configured to detect an angular velocity of an own vehicle to detect a current location of the vehicle .

The display module 16 displays route options retrieved by the route search module 14 on the display device. Further, the display module 16 displays the current location of the vehicle on the display device.

The map information storage 17 stores map information. The map information contains information indicating an automatic driving section allowing automatic driving of the vehicle.

The route option storage 18 stores a plurality of route options retrieved by the route search module 14.

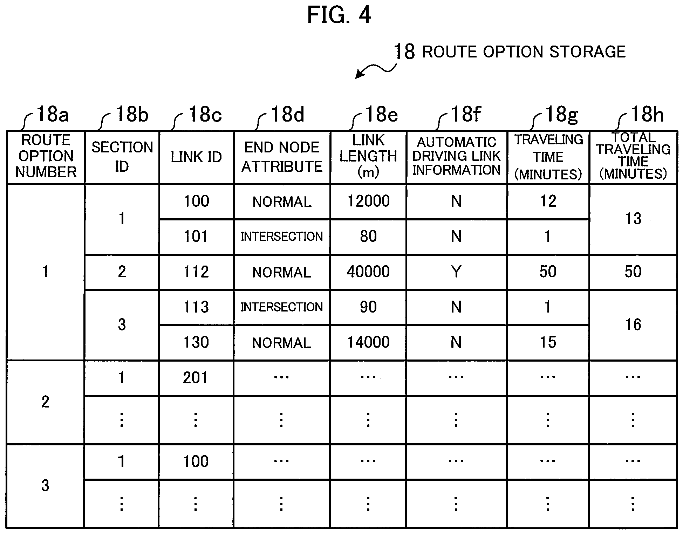

FIG. 4 is a table for showing an example of a data structure of the route option storage 18. As shown in FIG. 4, the route option storage 18 stores a route option Number 18a, a section ID 18b, a link ID 18c, an end node attribute 18d, a link length 18e, automatic driving link information 18f, a traveling time 18g, and a total traveling time 18h. Those pieces of route option information are retrieved (generated) and stored into the route option storage 18 by the route search module 14.

The route option Number 18a is identification information for identifying a plurality of route options retrieved by the route search module 14. In the case of the example of FIG. 4, the route option Number 18a indicates "1", "2", and "3", which means that the route search module 14 has retrieved three route options.

The section ID 18b is identification information that is assigned to a link of one or a plurality of consecutive automatic driving sections and a link of one or a plurality of consecutive manual driving sections. The section ID 18b is described in detail later.

The link ID 18c is identification information for identifying a link.

The end node attribute 18d is information for indicating an attribute of an end node of a link having the corresponding link ID 18c. For example, when the end node of a link is a straight line (is not a branch), the end node attribute 18d indicates "normal". Further, when the end node of a link is an intersection, the end node attribute 18d indicates "intersection".

The link length 18e is the length of a link having the corresponding link ID 18c.

The automatic driving link information 18f is information for indicating whether or not a link having the corresponding link ID 18c is a link that supports automatic driving. For example, "N" of the automatic driving link information 18f represents the fact that a link having the corresponding link ID 18c does not support automatic driving. "Y" of the automatic driving link information 18f represents the fact that a link having the corresponding link ID 18c supports automatic driving.

Now, the section ID 18b is described. Links of link IDs "100" and "101" shown in FIG. 4 are consecutive links because of "N" of the automatic driving link information 18f meaning manual driving sections. Thus, the section ID 18b corresponding to the link IDs "100" and "101" is assigned with the section ID "1", which identifies links of two consecutive manual driving sections.

A link ID "112" shown in FIG. 4 indicates an automatic driving section because of "Y" of the automatic driving link information 18f. The section ID 18b of the link ID "112" is assigned with the section ID "2", which identifies a link of one automatic driving section. When links of automatic driving sections are consecutive as in the case of the link IDs "100" and "101" described above, the links of the consecutive automatic driving sections are assigned with one section ID 18b.

Links having link IDs "113" and "130" shown in FIG. 4 are assigned with one section ID "3" similarly to the case of the link IDs "100" and "101" described above.

In short, links identified by the link IDs 18c are integrated into a set of manual driving sections or a set of automatic driving sections. Then, the section IDs 18b are assigned to the set of manual driving sections and the set of automatic driving sections.

The traveling time 18g is a traveling time (traveling scheduled time) of a link having the corresponding link ID 18c.

The total traveling time is a total traveling time (total traveling scheduled time) of links of the corresponding section ID 18b.

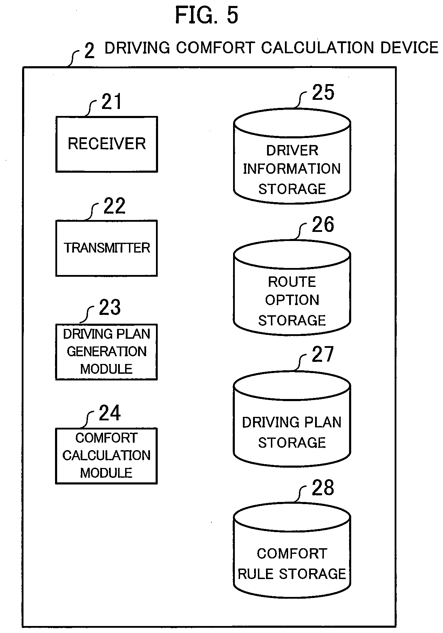

FIG. 5 is a diagram for illustrating an example of functional blocks of the driving comfort calculation device 2. As illustrated in FIG. 5, the driving comfort calculation device 2 includes a receiver 21, a transmitter 22, a driving plan generation module 23, a comfort calculation module 24, a driver information storage 25, a route option storage 26, a driving plan storage 27, and a comfort rule storage 28.

The receiver 21 receives information transmitted from the in-vehicle device 1.

The transmitter 22 transmits predetermined information to the in-vehicle device 1.

The driving plan generation module 23 generates a driving plan for each of a plurality of route options retrieved by the in-vehicle device 1. For example, the driving plan generation module 23 refers to the driver information storage 25 to set the traveling time of a section in which automatic driving of the vehicle is to be used and the traveling time of a section in which the vehicle is to be manually driven for each of the plurality of route options, to thereby generate a driving plan. The driving plan generation module 23 stores the generated driving plan into the driving plan storage 27.

The comfort calculation module 24 generates comfort for each of a plurality of route options retrieved by the in-vehicle device 1. For example, the comfort calculation module 24 calculates driving comfort of the driver for each of the plurality of route options based on the traveling time of a section in which automatic driving of the vehicle is to be used and the traveling time of a section in which the vehicle is to be manually driven, which are set by the driving plan generation module 23. When calculating comfort, the comfort calculation module 24 uses a rule stored in the comfort rule storage 28 to calculate the comfort.

The driver information storage 25 stores information on driving by the driver of the vehicle.

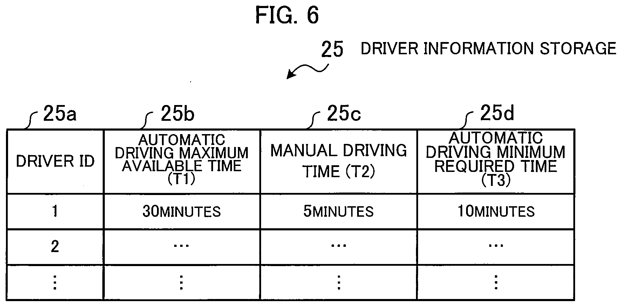

FIG. 6 is a table for showing an example of a data structure of the driver information storage 25. As shown in FIG. 6, the driver information storage 25 stores a driver ID 25a, an automatic driving maximum available time 25b, a manual driving time 25c, and an automatic driving minimum required time 25d.

The driver information stored in the driver information storage 25 is set by the driver. For example, the driver inputs driver information into the in-vehicle device 1 for transmission to the driving comfort calculation device 2. The receiver 21 of the driving comfort calculation device 2 receives the driver information transmitted from the in-vehicle device 1, and stores the received driver information into the driver information storage 25.

The driver ID 25a is identification information for identifying a driver.

The automatic driving maximum available time 25b is the maximum time during which the driver uses automatic driving continuously in an automatic driving section. For example, the driving plan generation module 23 does not generate a driving plan whose traveling time of automatic driving in an automatic driving section exceeds the automatic driving maximum available time 25b continuously. That is, the driving plan generation module 23 generates a driving plan that switches from automatic driving to manual driving when the traveling time of automatic driving in an automatic driving section exceeds the automatic driving maximum available time 25b.

The manual driving time 25c is a period of time in which the driver drives the vehicle manually in an automatic driving section . For example, when the traveling time of automatic driving in an automatic driving section exceeds the automatic driving maximum available time 25b, the driving plan generation module 23 generates a driving plan that switches from automatic driving to manual driving, and then switches from manual driving to automatic driving after the manual driving time 25c has elapsed.

The automatic driving minimum required time 25d is the minimum required time during which the driver uses automatic driving continuously in an automatic driving section. For example, when the traveling time of automatic driving in an automatic driving section is shorter than the automatic driving minimum required time, the driving plan generation module 23 generates such a driving plan that the driving of the vehicle is not switched to automatic driving.

In this manner, the automatic driving maximum available time 25b and the manual driving time 25c are set in order to prevent, for example, a decrease in attention of the driver due to automatic driving. Further, the automatic driving minimum required time 25d is set because, when the traveling time of automatic driving is short, the driver cannot take advantage of automatic driving and the number of operations of switching from automatic driving to manual driving or frommanual driving to automatic driving increases, resulting in a load on the driver.

In the following, the automatic driving maximum available time, the manual driving time, and the automatic driving minimum required time may be denoted by "T1", "T2", and "T3", respectively.

Referring back to description of FIG. 5, the route option storage 26 stores a plurality of route options retrieved by the in-vehicle device 1. For example, the transmitter 13 of the in-vehicle device 1 transmits a plurality of route options retrieved by the route search module 14 to the driving comfort calculation device 2. The receiver 21 of the driving comfort calculation device 2 receives the plurality of route options transmitted by the in-vehicle device 1 for storage into the route option storage 26. Therefore, pieces of information similar to those of the route option storage 18 of FIG. 4 are stored in the route option storage 26. A detailed description of an example of the data structure of the route option storage 26 is omitted here.

The driving plan storage 27 stores information on driving plans generated by the driving plan generation module 23.

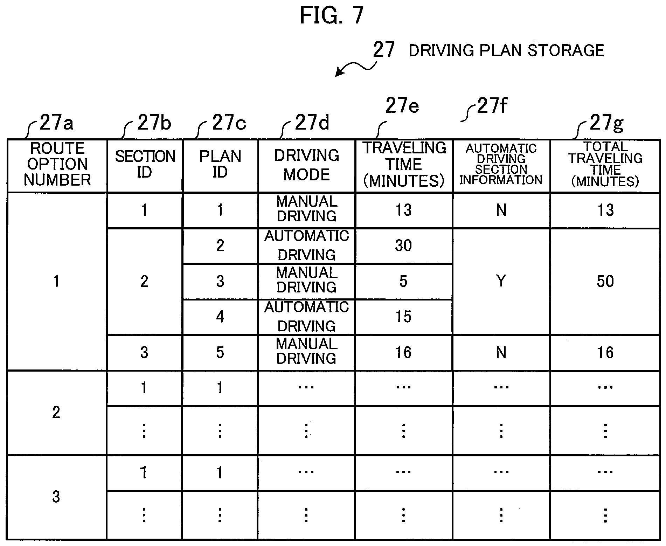

FIG. 7 is a table for showing an example of a data structure of the driving plan storage 27. As shown in FIG. 7, the driving plan storage 27 stores a route option Number 27a, a section ID 27b, a plan ID 27c, a driving mode 27d, a traveling time 27e, automatic driving section information 27f, and a total traveling time 27g.

The route option Number 27a, the section ID 27b, the automatic driving section information 27f, and the total traveling time 27g are similar to the route option Number 18a, the section ID 18b, the automatic driving link information 18f, and the total traveling time 18h described with reference to FIG. 4, respectively, and thus a description thereof is omitted here. Regarding the route option Number 27a, the section ID 27b, the automatic driving section information 27f, and the total traveling time 27g, the driving plan generation module 23 copies information on route options stored in the route option storage 26 for storage into the driving plan storage 27.

The plan ID 27c is identification information for identifying the driving mode 27d to be described next.

The driving mode 27d is a driving plan having the corresponding route option Number 27a. The driving mode 27d is generated by the driving plan generation module 23 for storage into the driving plan storage 27.

The traveling time 27e is the traveling time of the vehicle for the corresponding plan ID 27c.

Now, the driving plan generation module 23 is described in detail. The driving plan generation module 23 refers to the driver information storage 25 to set the traveling time of a section in which automatic driving of the vehicle is to be used and the traveling time of a section in which the vehicle is to be manually driven for route options retrieved by the in-vehicle device 1 (namely, route options stored in route option storage 26).

For example, the driving plan generation module 23 sets the driving mode of a manual driving section to "manual driving". Specifically, a route section of the section ID "1" of the route option No. "1" shown in FIG. 7 has the corresponding automatic driving section information 27f of "N" meaning a manual driving section. Therefore, the driving plan generation module 23 sets the route section of the section ID "1" of the route option No. "1" as a section of "manual driving". Then, the driving plan generation module 23 copies the total traveling time 27g of the section ID "1" into the traveling time 27e, and assigns with a plan ID "1".

The driving plan generation module 23 sets the driving mode so as to satisfy the driver information stored in the driver information storage 25 for the driving mode of an automatic driving section. Specifically, a route section of the section ID "2" of the route option No. "1" shown in FIG. 7 has the corresponding automatic driving section information 27f of "Y" meaning an automatic driving section. Further, the route section of the section ID "2" has the total traveling time of "50 minutes". "T1" of the driver ID "1" indicates "30 minutes" as can be seen from FIG. 6, and thus the driving plan generation module 23 sets the section of the traveling time of "30 minutes" as a section of "automatic driving" within the total traveling time of "50 minutes" of the section ID "2". Then, the driving plan generation module 23 assigns the set section with a plan ID "2".

Next, "T2" of the driver ID "1" indicates "5 minutes" as can be seen from FIG. 6, and thus the driving plan generation module 23 sets the section of the traveling time of "5 minutes" as a section of "manual driving" for the next section with the plan ID "2". Then, the driving plan generation module 23 assigns the set section with a plan ID "3".

The remaining traveling time of the section ID "2" is "15 minutes (=50-30-5)" with respect to the total traveling time of "50 minutes" of the section ID "2". As can be seen from FIG. 6, "15 minutes" is shorter than "T1" of the driver ID "1" and longer than "T3" thereof. Therefore, the driving plan generation module 23 sets the next section of the plan ID "3" as a section of "automatic driving".

When the remaining traveling time of the section ID "2" is shorter than "T3", the driving plan generation module 23 sets the next section as a section of "manual driving".

In other words, the driving plan generation module 23 sets (generates driving plan) the automatic driving section of the vehicle so that a section in which automatic driving of the vehicle is to be used and a section in which the vehicle is to be manually driven alternate with each other. Further, the driving plan generation module 23 generates such a driving plan that the traveling time of a section in which automatic driving of the vehicle is to be used is "T1" and the traveling time of a section in which the vehicle is to be manually driven is "T2". With this, the driving plan generation module 23 can generate a driving plan that prevents, for example, a decrease in attention of the driver in an automatic driving section.

Further, the driving plan generation module 23 generates such a driving plan that the traveling time of a section in which automatic driving of the vehicle is to be used is not shorter than "T3". With this, the driving plan generation module 23 can generate a driving plan that can reduce a load on the driver due to an operation of switching between automatic driving and manual driving.

Further, the driver information storage 25 stores driver information on driving for each driver. With this, the driving plan generation module 23 can generate a driving plan that suits each driver.

Referring back to description of FIG. 5, the comfort rule storage 28 stores a rule for calculating driving comfort.

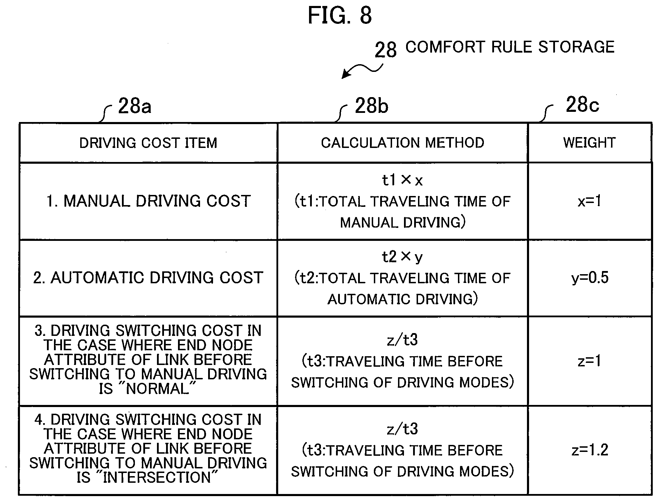

FIG. 8 is a table for showing an example of a data structure of the comfort rule storage 28. As shown in FIG. 8, the comfort rule storage 28 stores a driving cost item 28a, a calculation method 28b, and a weight 28c.

The driving cost item 28a is an item for which a driving cost is to be calculated.

The calculation method 28b is a method of calculating a driving cost for the corresponding driving cost item 28a.

The weight 28c is a weight to be used at the time of calculating the driving cost using the corresponding calculation method 28b.

Now, the comfort calculation module 24 is described in detail. The comfort calculation module 24 uses a rule stored in the comfort rule storage 28 to calculate comfort for each of a plurality of route options in the driving plan generated by the driving plan generation module 23. For example, the comfort calculation module 24 calculates a manual driving cost, an automatic driving cost, and a driving switching cost for the route option No. "1" of the driving plan storage 27 of FIG. 7.

Specifically, the comfort calculation module 24 refers to the driving plan storage 27 to calculate a total traveling time "t1" of manual driving. Then, as shown in the calculation method 28b of a driving cost item "1" of FIG. 8, the comfort calculation module 24 multiplies the total traveling time "t1" of manual driving by a weight "x=1", to thereby calculate the manual driving cost of the route option No. "1".

Further, the comfort calculation module 24 refers to the driving plan storage 27 to calculate a total traveling time "t2" of automatic driving. Then, as shown in the calculation method 28b of a driving cost item "2" of FIG. 8, the comfort calculation module 24 multiplies the total traveling time "t2" of automatic driving by a weight "y=0.5", to thereby calculate the automatic driving cost of the route option No. "1".

Further, the comfort calculation module 24 refers to the driving plan storage 27 and the route option storage 26 to acquire an end node attribute of a link before switching from automatic driving to manual driving (driving mode of link before switching from automatic driving to manual driving is automatic driving) in an automatic driving section. Further, the comfort calculation module 24 acquires a traveling time "t3" before switching of driving modes (traveling time before switching of driving modes is traveling time of automatic driving). Then, when the acquired end node attribute is "normal", as shown in the calculation method 28b of a driving cost item "3" of FIG. 8, the comfort calculation module 24 divides the weight "z=1" by the acquired traveling time "t3". In other cases, when the acquired end node attribute is "intersection", as shown in the calculation method 28b of a driving cost item "4" of FIG. 8, the comfort calculation module 24 divides the weight "z=1.2" by the acquired traveling time "t3" . Every time the driving mode in an automatic driving section of the driving plan storage 27 is switched from automatic driving to manual driving, the comfort calculation module 24 performs the above-mentioned calculation, calculates a total value thereof, and sets the total value as the driving switching cost in the automatic driving section.

The comfort calculation module 24 adds the calculated manual driving cost, automatic driving cost, and driving switching cost, to thereby calculate the driving cost of the route option No. "1". The comfort calculation module 24 calculates comfort for the route option No. "1" based on the calculated driving cost. For example, the comfort calculation module 24 calculates a reciprocal of the driving cost as the comfort. The comfort calculation module 24 calculates the driving cost similarly for each of the other route options No. "2" and No. "3", to thereby calculate comfort.

Automatic driving is expected to cause a smaller load on the driver than manual driving, and thus the weight of the automatic driving cost is smaller than the weight of the manual driving cost.

Further, an operation of switching from automatic driving to manual driving in an automatic driving section is expected to cause a larger load on the driver as the operation is performed closer to the intersection. Therefore, the comfort calculation module 24 multiplies the reciprocal (1/t3) of the traveling time before occurrence of switching from automatic driving to manual driving by the weight (z=1 or 1.2) corresponding to the end node attribute.

The transmitter 22 transmits comfort calculated for each of the plurality of route options by the comfort calculation module 24 to the in-vehicle device 1. With this, the in-vehicle device 1 can display route options of driving comfort on the display device . Further, the transmitter 22 may transmit information (driving plan) on sections set by the driving plan generation module 23 to the in-vehicle device 1. With this, the in-vehicle device 1 can display a driving plan generated by the driving plan generation module 23 on the display device.

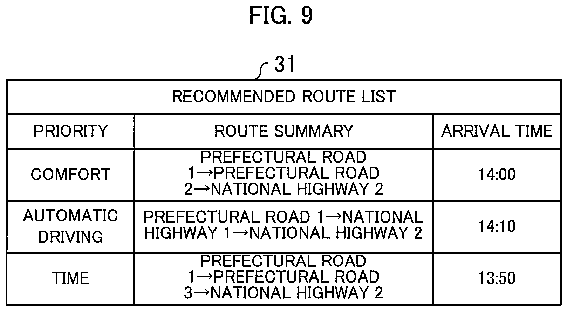

FIG. 9 is Part 1 of a diagram for illustrating an example of a screen displayed on the display device of the in-vehicle device 1. As illustrated in FIG. 9, a screen 31 is displayed on the display device of the in-vehicle device 1. A list of recommended routes is displayed on the screen 31. The screen 31 displays a route summary prioritizing comfort, a route summary prioritizing automatic driving, and a route summary prioritizing time.

The in-vehicle device 1 retrieves a plurality of route options, and receives comfort for each of the plurality of retrieved route options from the driving comfort calculation device 2. The in-vehicle device 1 displays a route summary of a route option prioritizing comfort (having highest comfort) on the screen 31.

Further, the in-vehicle device 1 displays, on the screen 31, a route summary of a route option prioritizing automatic driving (having longest automatic driving time) and a route option prioritizing time (having shortest driving time) among the plurality of retrieved route options.

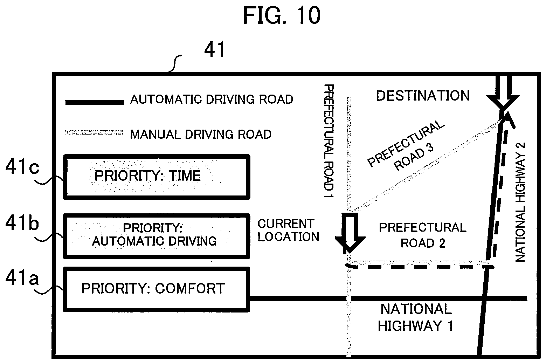

FIG. 10 is Part 2 of a diagram for illustrating an example of a screen displayed on the display device of the in-vehicle device 1. As illustrated in FIG. 10, a screen 41 is displayed on the display device of the in-vehicle device 1. The screen 41 displays a route of a route option prioritizing comfort.

Buttons 41a to 41c are displayed on the screen 41. It is possible to switch display between routes of the route options prioritizing comfort, automatic driving, and time by selecting one of the buttons 41a to 41c. The screen 41 is displayed when the button 41a is selected.

Signs indicating the current location and the destination are displayed on a map of the screen 41. Further, a recommended route (route prioritizing comfort in the case of FIG. 10) is displayed on the map of the screen 41. The route displayed on the map includes an automatic driving road and a manual driving road, which are displayed in different formats.

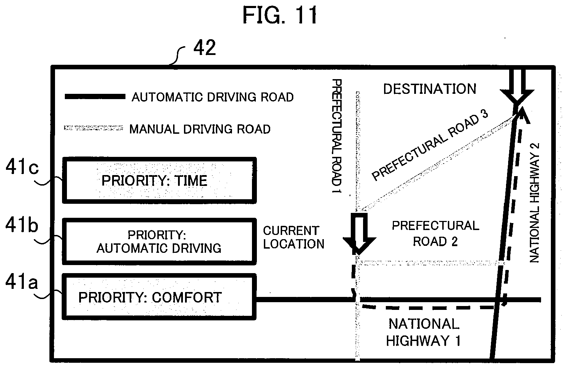

FIG. 11 is Part 3 of a diagram for illustrating an example of the screen displayed on the display device of the in-vehicle device 1. In FIG. 11, the same components as those of FIG. 10 are assigned with the same reference symbols.

As illustrated in FIG. 11, a screen 42 is displayed on the display device of the in-vehicle device 1. The screen 42 displays a route of a route option prioritizing automatic driving. The screen 42 is displayed when the button 41b is selected.

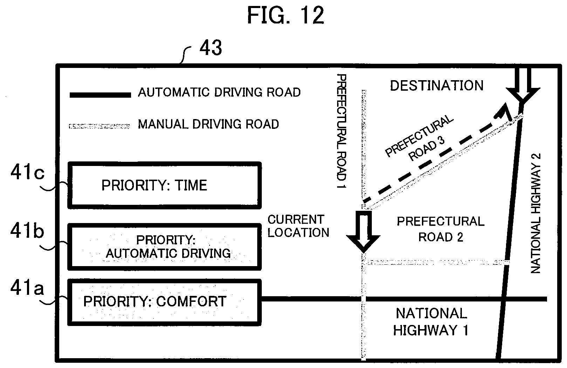

FIG. 12 is Part 4 of a diagram for illustrating an example of the screen displayed on the display device of the in-vehicle device 1. In FIG. 12, the same components as those of FIG. 10 are assigned with the same reference symbols.

As illustrated in FIG. 12, a screen 43 is displayed on the display device of the in-vehicle device 1. The screen 43 displays a route of a route option prioritizing time. The screen 43 is displayed when the button 41c is selected.

Now, an example of an operation performed by the driving comfort calculation device 2 is described with reference to a flow chart.

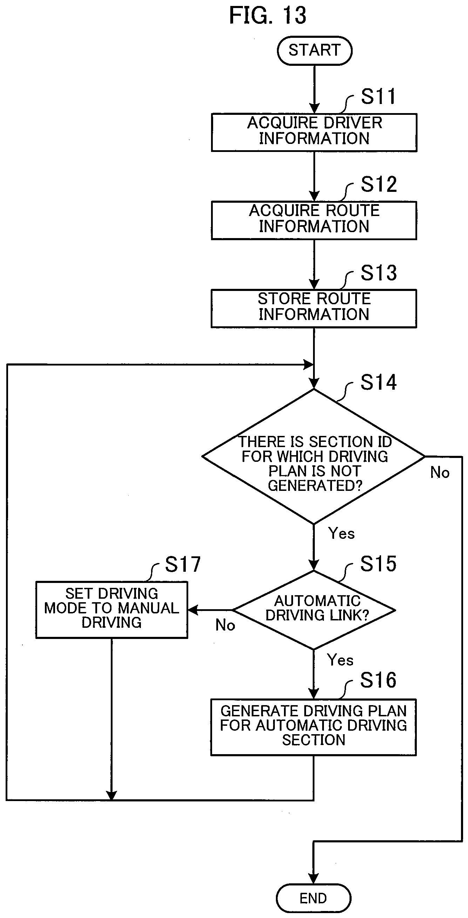

FIG. 13 is a flow chart for illustrating an example of an operation of generating a driving plan by the driving comfort calculation device 2. The driver gives a route search request to the in-vehicle device 1. The in-vehicle device 1 retrieves a plurality of route options in response to the route search request of the driver for transmission to the driving comfort calculation device 2. The receiver 12 of the driving comfort calculation device 2 stores the plurality of received route options into the route option storage 26. Further, the driver information on driving by a driver who has given the route search request is stored in the driver information storage 25 in advance.

First, the driving plan generation module 23 refers to the driver information storage 25 to acquire the driver information on the driver who has given the route search request (Step S11). For example, when the driver ID of the driver who has given the route search request is "1", the driving plan generation module 23 acquires driver information of the driver ID "1" from the driver information storage 25.

Next, the driving plan generation module 23 refers to the route option storage 26 to acquire route information on one route option among a plurality of route options (Step S12). For example, the driving plan generation module 23 acquires route information of the route option No. "1" (refer to FIG. 4).

Next, the driving plan generation module 23 stores (copies) a part of acquired route information into the driving plan storage 27 (Step S13). For example, the driving plan generation module 23 stores the route option No., the section ID, the automatic driving section information, and the total traveling time acquired in Step S12 into the driving plan storage 27 (refer to FIG. 7).

Next, the driving plan generation module 23 determines whether or not there is a section ID for which a driving plan is not generated among section IDs (refer to section ID 27b of FIG. 7) stored in Step S13 (Step S14). When the driving plan generation module 23 determines that there is a section ID for which a driving plan is not generated ("Yes" in Step S14), the driving plan generation module 23 advances the processing to Step S15. When the driving plan generation module 23 determines that there is no section ID for which a driving plan is not generated ("No" in Step S14), the driving plan generation module 23 ends the processing of this flow chart.

In Step S14, when the driving plan generation module 23 determines that there is a section ID for which a driving plan is not generated ("Yes" in Step S14), the driving plan generation module 23 determines whether or not the automatic driving section information (refer to automatic driving section information 27f of FIG. 7) of the section ID is "automatic driving" (Step S15). When the driving plan generation module 23 determines that the automatic driving section information of the section ID is "automatic driving" ("Yes" in Step S15), the driving plan generation module 23 advances the processing to Step S16. When the driving plan generation module 23 determines that the automatic driving section information of the section ID is not "automatic driving" ("No" in Step S15), the driving plan generation module 23 advances the processing to Step S17.

When the driving plan generation module 23 determines in Step S15 that the automatic driving section information of the section ID is "automatic driving" ("Yes" in Step S15), the driving plan generation module 23 generates a driving plan for the automatic driving section so as to satisfy the driver information acquired in Step S11 (Step S16). Processing of generating a driving plan for an automatic driving section is described in detail later.

When the driving plan generation module 23 determines in Step S15 that the automatic driving section information of the section ID is not "automatic driving" ("No" in Step S15), the driving plan generation module 23 sets the driving mode of the driving plan storage 27 to "manual driving" (Step S17). Then, the driving plan generation module 23 generates a predetermined plan ID for storage into the driving plan storage 27. Further, the driving plan generation module 23 stores the traveling time into the driving plan storage 27 (copies total traveling time). Then, the driving plan generation module 23 advances the processing to Step S14.

The driving plan generation module 23 executes processing similar to the flow chart of FIG. 13 also for other route options. For example, the driving plan generation module 23 executes processing similar to the flow chart of FIG. 13 also for the route options No. "2" and No. "3". With this, a driving plan is generated for each of the plurality of route options.

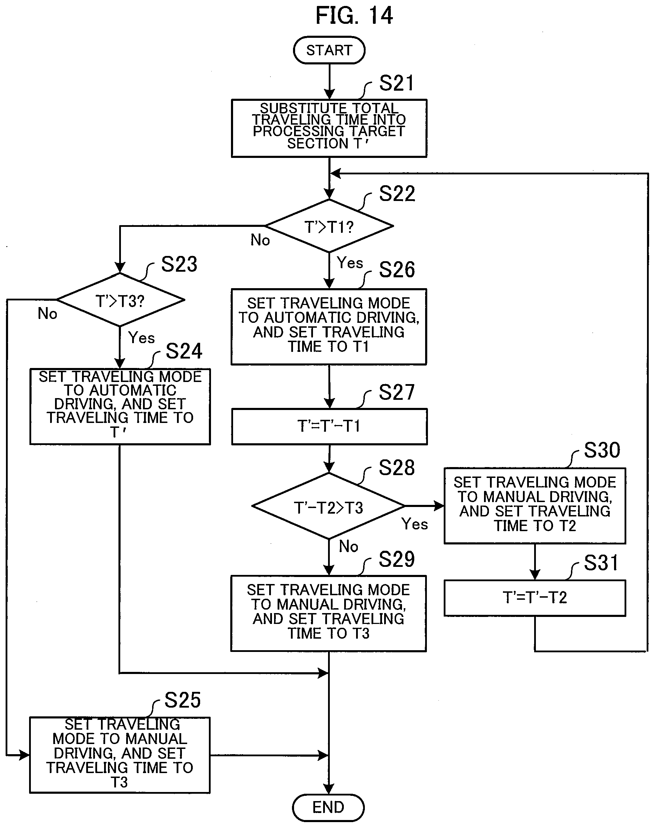

FIG. 14 is a flow chart for illustrating an example of an operation of generating a driving plan for an automatic driving section by the driving comfort calculation device 2. The flow chart of FIG. 14 is an illustration of a detailed example of the processing of Step S16 of FIG. 13.

First, the driving plan generation module 23 substitutes the total traveling time of a section ID for which a driving plan is to be generated, into a processing target section "T'", which is a variable (Step S21). For example, in the case of an example of FIG. 7, the driving plan generation module 23 sets "T'=50".

Next, the driving plan generation module 23 determines whether or not "T'>T1" is satisfied (Step S22). In other words, the driving plan generation module 23 determines whether or not the variable "T'" is larger than "automatic driving maximum available time" of the driver information acquired in Step S11 of FIG. 13. When the driving plan generation module 23 determines that "T'>T1" is satisfied ("Yes" in Step S22), the driving plan generation module 23 advances the processing to Step S26. When the driving plan generation module 23 determines that "T'>T1" is not satisfied ("No" in Step S22), the driving plan generation module 23 advances the processing to Step S23.

When the driving plan generation module 23 determines in Step S22 that "T'>T1" is not satisfied ("No" in Step S22), the driving plan generation module 23 determines whether or not "T'>T3" is satisfied (Step S23). When the driving plan generation module 23 determines that "T'>T3" is satisfied ("Yes" in Step S23), the driving plan generation module 23 advances the processing to Step S24. When the driving plan generation module 23 determines that "T'>T3" is not satisfied ("No" in Step S23), the driving plan generation module 23 advances the processing to Step S25.

When the driving plan generation module 23 determines in Step S23 that "T'>T3" is satisfied ("Yes" in Step S23), the driving plan generation module 23 sets the driving mode to "automatic driving" and the traveling time to "T'" (Step S24). Then, the driving plan generation module 23 generates a predetermined plan ID for storage into the driving plan storage 27. Then, the driving plan generation module 23 ends the processing of the flow chart.

When the driving plan generation module 23 determines in Step S23 that "T'>T3" is not satisfied ("No" in Step S23), the driving plan generation module 23 sets the driving mode to "manual driving" and the traveling time to "T3" (StepS25). Then, the driving plan generation module 23 generates a predetermined plan ID for storage into the driving plan storage 27. Then, the driving plan generation module 23 ends the processing of the flow chart.

When the driving plan generation module 23 determines in Step S22 that "T'>T1" is satisfied ("Yes" in Step S22), the driving plan generation module 23 sets the driving mode to "automatic driving" and the traveling time to "T1" (Step S26). Then, the driving plan generation module 23 generates a predetermined plan ID for storage into the driving plan storage 27. That is, the driving plan generation module 23 generates such a driving plan that the traveling time of automatic driving does not exceed the automatic driving maximum available time of the driver.

Next, the driving plan generation module 23 substitutes the value of "T'-T1" into the variable "T'" (Step S27).

Next, the driving plan generation module 23 determines whether or not "T'-T2>T3" is satisfied (Step S28). In other words, the driving plan generation module 23 determines whether or not the traveling time of automatic driving is longer than the automatic driving minimum required time of the driver information. When the driving plan generation module 23 determines that "T'-T2>T3" is satisfied ("Yes" in Step S28), the driving plan generation module 23 advances the processing to Step S30. When the driving plan generation module 23 determines that "T'-T2>T3" is not satisfied ("No" in Step S28), the driving plan generation module 23 advances the processing to Step S29.

In Step S28, when the driving plan generation module 23 determines that "T'-T2>T3" is not satisfied ("No" in Step S28), the driving plan generation module 23 sets the driving mode to "manual driving" and the traveling time to "T3" (Step S29). Then, the driving plan generation module 23 generates a predetermined plan ID for storage into the driving plan storage 27. Then, the driving plan generation module 23 ends the processing of the flow chart.

In Step S28, when the driving plan generation module 23 determines that "T'-T2>T3" is satisfied ("Yes" in Step S28), the driving plan generation module 23 sets the driving mode to "manual driving" and the traveling time to "T2" (Step S30). Then, the driving plan generation module 23 generates a predetermined plan ID for storage into the driving plan storage 27.

Next, the driving plan generation module 23 substitutes the value of "T'-T2" into the variable "T'" (Step S31). Then, the driving plan generation module 23 advances the processing to Step S22.

Through the processing described above, a driving plan for an automatic driving section satisfying the driver information on a driver is generated.

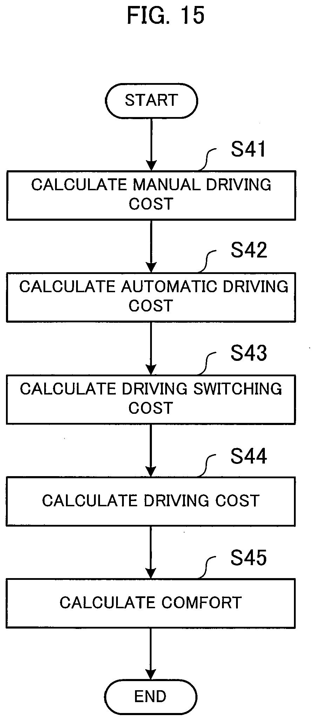

FIG. 15 is a flow chart for illustrating an example of an operation of calculating comfort by the driving comfort calculation device 2. When the driving comfort calculation device 2 generates a driving plan for each of a plurality of route options, the driving comfort calculation device 2 executes processing of the flow chart illustrated in FIG. 15. The driving comfort calculation device 2 executes the processing of the flow chart illustrated in FIG. 15 for each of the plurality of route options to calculate comfort for each of the plurality of route options.

First, the comfort calculation module 24 calculates a manual driving cost based on the calculation method 28b of the driving cost item "1" of FIG. 8, for example (Step S41).

Next, the comfort calculation module 24 calculates an automatic driving cost based on the calculation method 28b of the driving cost item "2" of FIG. 8, for example (Step S42).

Next, the comfort calculation module 24 calculates a driving switching cost based on the calculation method 28b of the driving cost item "3" or "4" of FIG. 8, for example (Step S43).

Next, the comfort calculation module 24 adds the manual driving cost calculated in Step S41, the automatic driving cost calculated in Step S42, and the driving switching cost calculated in Step S43 to calculate the driving cost (Step S44).

Next, the comfort calculation module 24 calculates comfort based on the driving cost calculated in Step S44 (Step S45) . For example, the comfort calculation module 24 calculates a reciprocal of the driving cost as comfort.

Through the processing described above, it is possible to calculate comfort for each of the plurality of route options.

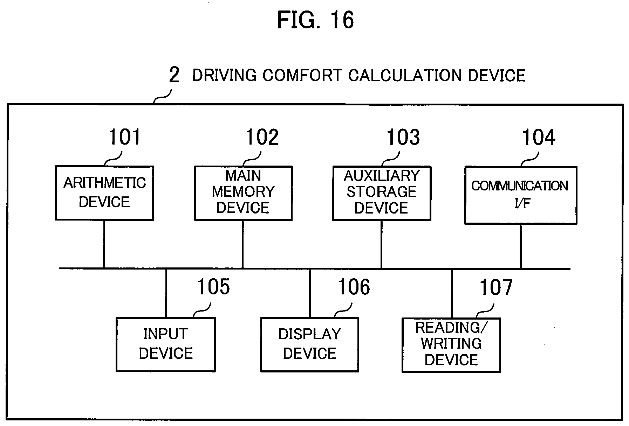

FIG. 16 is a diagram for illustrating an example of a hardware configuration of the driving comfort calculation device 2. The driving comfort calculation device 2 can be implemented by, for example, a computer illustrated in FIG. 16, which includes: an arithmetic device 101, for example, a central processing unit (CPU) ; a main memory device 102, for example, a random access memory (RAM); an auxiliary storage device 103, for example, a hard disk drive (HDD); a communication interface (I/F) 104 for connecting to a communication network by wired or wireless connection; an input device 105 such as a mouse, a keyboard, a touch sensor, or a touch panel; a display device 106, for example, a liquid crystal display; and a read/write device 107 configured to read/write information from/into a portable storage medium, for example, a digital versatile disc (DVD).

Functions of the driving comfort calculation device 2 are implemented by, for example, the arithmetic device 101 executing a predetermined program loaded into the main memory device 102 from, for example, the auxiliary storage device 103. Further, each storage of the driving comfort calculation device 2 is implemented by, for example, the arithmetic device 101 using the main memory device 102 or the auxiliary storage device 103.

The predetermined program may be installed from, for example, a storage medium read by the reading/writing device 107, or a network via the communication I/F 104. Functions of the in-vehicle device 1 can also be implemented by hardware similar to that of FIG. 16.

In this manner, the driving plan generation module 23 of the driving comfort calculation device 2 sets the traveling time of a section in which automatic driving of the vehicle is to be used and the traveling time of a section in which the vehicle is to be manually driven for each of the plurality of route options retrieved by the in-vehicle device 1. Then, the comfort calculation module 24 calculates driving comfort of the driver for each of the plurality of route options based on the traveling time of the section in which automatic driving of the vehicle is to be used and the traveling time of the section in which the vehicle is to be manually driven. With this, the in-vehicle device 1 can present a route option giving high driving comfort for the driver.

The driving comfort calculation device 2 may change driver information stored in the driver information storage 25 based on traffic jam information. For example, when a traffic jam has occurred, the traveling speed of the vehicle is low, and thus the driver is less likely to request automatic driving. Further, when a traffic jam has occurred, the ability of the driver to monitor automatic driving may deteriorate. Thus, when a traffic jam has occurred, a driver information change module (not shown) shortens the automatic driving maximum available time. The driver information change module may acquire the traffic jam information from, for example, the VICS (trademark).

Further, the driver information change module may change the driver information stored in the driver information storage 25 depending on the speed of the vehicle. For example, when the speed of 30 km/h continues for a predetermined period of time, the driver information change module may shorten the automatic driving maximum available time based on the assumption that a traffic jam has occurred.

Further, the driving comfort calculation device 2 may generate driver information to be stored into the driver information storage 25 based on information on the driver. For example, a driver information generation module (not shown) may generate driver information based on, for example, an age or driving experience of the driver.

Further, in the above, the in-vehicle device 1 retrieves a route option, but the driving comfort calculation device 2 may retrieve a route option instead. For example, the driving comfort calculation device 2 may include a route search module (not shown), and receive the departure point and destination input by the driver for retrieval of a route option. That is, the driving comfort calculation device 2 may include a part or all of the functions of the in-vehicle device 1.

Further, the in-vehicle device 1 may generate a driving plan and calculate comfort for a route option. That is, the in-vehicle device 1 may include a part or all of the functions of the driving comfort calculation device 2.

Further, the driving switching cost may be calculated for switching from manual driving to automatic driving. Further, the driving switching cost may simply be set to the number of times of switching of driving modes.

Further, the driver information storage 25 may not store the automatic driving minimum required time 25d. That is, the driving plan generation module 23 may set the traveling time of a section in which automatic driving of the vehicle is to be used and the traveling time of a section in which the vehicle is to be manually driven based on the automatic driving maximum available time 25b and the manual driving time 25c.

Further, the comfort calculation module 24 may calculate the driving cost based on the traveling time of a section in which automatic driving of the vehicle is to be used and the traveling time of a section in which the vehicle is to be manually driven. That is, the comfort calculation module 24 may calculate the driving cost without including the driving switching cost in the driving cost.

Further, the driver information stored in the driver information storage 25 maybe determined by a predetermined authority concerned.

In the above, the present invention is described by way of the embodiment, but the technical scope of the present invention is not limited to the scope of descriptions of the above-mentioned embodiment. It is apparent to those skilled in the art that various modifications and improvements can be added to the above-mentioned embodiment. It is also apparent from the description of the appended claims that the embodiment added with such modifications and improvements can also be included in the technical scope of the present invention.

Further, the functional configurations of the in-vehicle device 1 and the driving comfort calculation device 2 described above are classified in accordance with details of main processing in order to facilitate understanding of the configurations of the in-vehicle device 1 and the driving comfort calculation device 2. The invention of the present application is not limited by the names or method of classification of components. The configurations of the in-vehicle device 1 and the driving comfort calculation device 2 can be classified into a larger number of components depending on details of the processing. Further, components may be classified so that one component executes a larger number of processing steps. Further, processing of each component may be executed by one piece of hardware or a plurality of pieces of hardware.

Further, each processing unit of the flow charts described above is obtained by division that depends on details of main processing in order to facilitate the processing of the in-vehicle device 1 and the driving comfort calculation device 2. The invention of the present application is not limited by the names or method of classification of processing units. The processing of the in-vehicle device 1 and the driving comfort calculation device 2 can be divided into a larger number of processing units depending on details of the processing. Further, the processing may be divided so that one processing unit includes a larger number of processing steps. Further, the present invention may be provided as a program for implementing the functions of the in-vehicle device 1 and the driving comfort calculation device 2 and as a storage medium having the program stored thereon.

### Reference Signs List

1 ··· in-vehicle device, 2 ··· driving comfort calculation device, 3 ··· network, 11 ··· input module, 12 ··· receiver, 13 ··· transmitter, 14 ··· route search module, 15 ··· position measurement module, 16 ··· display module, 17 ··· map information storage, 18 ··· route option storage, 21 ··· receiver, 22 ··· transmitter, 23 ··· driving plan generation module, 24 ··· comfort calculation module, 25 ··· driver information storage, 26 ··· route option storage, 27 ··· driving plan storage, 28 ··· comfort rule storage

## Claims

1. A driving comfort calculation device, comprising:
a receiver configured to receive a plurality of route options from a terminal device mounted on a vehicle;
a driving plan generation module configured to set, for each of the plurality of received route options, a traveling time of a section in which automatic driving of the vehicle is to be used and a traveling time of a section in which the vehicle is to be manually driven; and
a comfort calculation module configured to calculate driving comfort of a driver for each of the plurality of received route options based on the traveling time of the section in which automatic driving of the vehicle is to be used and the traveling time of the section in which the vehicle is to be manually driven.

2. A driving comfort calculation device according to claim 1, further comprising a driver information storage configured to store an automatic driving maximum available time during which automatic driving of the vehicle is used in an automatic driving section allowing automatic driving of the vehicle and a manual driving time during which the driver manually drives the vehicle in the automatic driving section allowing automatic driving of the vehicle,
wherein the driving plan generation module is configured to set the automatic driving maximum available time as the traveling time of the section in which automatic driving of the vehicle is to be used and the manual driving time as the traveling time of the section in which the vehicle is to be manually driven.

3. A driving comfort calculation device according to claim 2,
wherein the driver information storage is configured to further store a minimum required time during which the driver uses automatic driving of the vehicle in the automatic driving section, and
wherein the driving plan generation module is configured to set the traveling time of the section in which automatic driving of the vehicle is to be used so as not to be shorter than the minimum required time.

4. A driving comfort calculation device according to claim 1, wherein the comfort calculation module is configured to calculate the comfort by assigning different weights to the traveling time in which automatic driving of the vehicle is to be used and the traveling time in which the vehicle is to be manually driven.

5. A driving comfort calculation device according to claim 1, wherein the comfort calculation module is configured to calculate the comfort based on a cost of switching from automatic driving to manual driving in an automatic driving section allowing automatic driving of the vehicle.

6. A driving comfort calculation device according to claim 1, further comprising a transmitter configured to transmit the comfort to the terminal device.

7. A driving comfort calculation device according to claim 6, wherein the transmitter is configured to transmit information on a section set by the driving plan generation module to the terminal device.

8. A driving comfort calculation method to be executed by a computer, the driving comfort calculation method comprising:
a reception step of receiving a plurality of route options from a terminal device mounted on a vehicle;
a driving plan generation step of setting, for each of the plurality of received route options, a traveling time of a section in which automatic driving of the vehicle is to be used and a traveling time of a section in which the vehicle is to be manually driven; and
a comfort calculation step of calculating driving comfort of the driver for each of the plurality of received route options based on the traveling time of the section in which automatic driving of the vehicle is to be used and the traveling time of the section in which the vehicle is to be manually driven.

9. A driving comfort calculation system, comprising:
a route search device configured to retrieve a plurality of route options; and
a driving comfort calculation device including:
a receiver configured to receive the plurality of route options from the route search device;
a driving plan generation module configured to set, for each of the plurality of received route options, a traveling time of a section in which automatic driving of the vehicle is to be used and a traveling time of a section in which the vehicle is to be manually driven; and
a comfort calculation module configured to calculate driving comfort of the driver for each of the plurality of route options based on the traveling time of the section in which automatic driving of the vehicle is to be used and the traveling time of the section in which the vehicle is to be manually driven.

10. A driving comfort calculation system according to claim 9, wherein the route search device further includes a display module configured to:
receive the comfort from the driving comfort calculation device and;
display a comfort-prioritized route option relating to comfort on a display device.
